(19) **Europäisches Patentamt / European Patent Office / Office européen des brevets**

(11) **EP 4 152 240 A1**

(12) **EUROPEAN PATENT APPLICATION**
published in accordance with Art. 153(4) EPC

(43) Date of publication:
**22.03.2023 Bulletin 2023/12**

(21) Application number: **20941770.8**

(22) Date of filing: **22.06.2020**

(51) International Patent Classification (IPC):
**G06Q 50/00** *(2006.01)*

(52) Cooperative Patent Classification (CPC):
**G06Q 50/00**

(86) International application number:
**PCT/ES2020/070405**

(87) International publication number:
**WO 2021/260235 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TELEFÓNICA IOT & BIG DATA TECH, S.A.**
**28050 Madrid (ES)**

(72) Inventors:
• **BARBADO GONZÁLEZ, Alberto**
**28013 Madrid (ES)**

• **ALONSO BAIGORRI, Pedro Antonio**
**28013 Madrid (ES)**
• **PÉREZ ROSADO, Federico**
**28013 Madrid (ES)**
• **CRESPO CRISENTI, Raquel**
**28013 Madrid (ES)**
• **GARCÍA FERNÁNDEZ, Daniel**
**28013 Madrid (ES)**

(74) Representative: **Carlos Hernando, Borja**
**Garrigues IP, S.L.P.**
**Hermosilla, 3**
**28001 Madrid (ES)**

(54) **METHOD AND COMPUTER PROGRAMMES FOR THE MANAGEMENT OF VEHICLE FLEETS**

(57) A method and computer programmes for the management of vehicle fleets are proposed. The method comprises the obtaining of data concerning the state and the operation of each of a plurality of vehicles of a particular type in a vehicle fleet; detecting an anomalous average fuel consumption over a certain period in at least one first vehicle of said vehicle fleet on the basis of analysis of the data received; determining and accounting for the cause of said anomalous average fuel consumption detected by means of the implementation of an explainable artificial intelligence algorithm that takes into account different parameters of the first vehicle, including parameters concerning: the driving behaviour of the first vehicle over a set period of time, the state of the first vehicle, and a number of meteorological and environmental elements.

FIG. 1

EP 4 152 240 A1

**Description**

Technical field

The present invention relates to a method for the management of vehicle fleets. More specifically, the method makes it possible to know the state of the vehicles and automatically detect anomalies in average fuel consumption, including explanations of the variables that have contributed to the average fuel consumption being anomalous with respect to the rest of the vehicles in the fleet.

Background of the invention

In fleet management, it is important to know the state of the vehicles and to be able to detect when, for example, one of them is having an anomalous average fuel consumption, and thus be able to act on it. The detection of anomalous average fuel consumption often requires the application of machine learning techniques, which can detect when a specific vehicle is having an average fuel consumption significantly different from that of the rest of the vehicles in the fleet.

However, these methods are limited to indicating which vehicles are anomalous, without giving any explanation of why or what causes are influencing it.

Disclosure of the invention

The present invention arises from the need to cover the shortage of Big Data analytics associated with the assets of vehicle rental companies, large companies with fleets of automobiles and courier, logistics or distribution corporations, where traceability and the intrinsic characteristics of each sector makes it essential to intelligently manage the information generated by the activity of each fleet.

Within the set of proposals for the reduction of costs and gasoline consumption, there is a need to know which vehicles in the fleet are consuming more than necessary and what is the cause of it.

To this end, exemplary embodiments of the present invention provide, according to a first aspect, a method for the management of a vehicle fleet that comprises the obtaining of data concerning the state and the operation of each of a plurality of vehicles in a fleet considering the type of vehicle; detecting which vehicles, and at least one first vehicle, of said fleet of vehicles have an anomalous average fuel consumption over a certain period on the basis of analysis of the data received; and determining and accounting for the cause of said anomalous average fuel consumption detected by means of the implementation of an explainable artificial intelligence algorithm, or XAI, that takes into account different parameters of the first vehicle, for example, parameters concerning the driving behaviour of the first vehicle over a set period of time, the state of the first vehicle, and a number of meteorological and environmental elements.

Therefore, the present invention makes it possible to automatically detect anomalies in the average fuel consumption of the vehicles in a fleet, and together with this, to explain why a vehicle has an anomalous average fuel consumption based on both the behaviour it has had throughout the day and its state and certain environmental elements. The method for generating explanations is agnostic to the method for the detection of anomalies used. In addition, the method makes it possible to obtain explanations both at the vehicle level and on a specific day, as well as at the group level during a dynamic period of time freely defined by the user.

In an exemplary embodiment, the data concerning the state and the operation of the vehicle fleet are separated according to a trip taken by each vehicle, wherein said route comprises driving the vehicle in the city, on the highway, or combined city/highway driving.

According to the invention, the parameters concerning the driving behaviour of the first vehicle may include: number of harsh braking operations of the first vehicle over said set period of time; number of harsh turns of the first vehicle over said set period of time; number of jackrabbit accelerations of the first vehicle over said set period of time; number of events in neutral gear; number of events in reverse gear; time with speed control active; total time over said set period of time with speed equal to 0; mean value of braking acceleration; mean value of forward acceleration; mean value of speeds in the city and/or on the highway; percentage of idling fuel consumption of the first vehicle with respect to its total fuel consumption; percentage of time with city behaviour; number of events with RPM above a threshold; time with a speed greater than 120 km/h; time with RPM > 3500 and speed < 40 km/h; time with RPM > 3500 and speed <= 80 km/h and >= 40 km/h; and/or time with RPM > 3500 and speed > 80 km/h.

The parameters concerning the state of the first vehicle may include: a difference between the maximum and minimum remaining service life of the engine oil over said set period of time; a difference between the maximum and minimum DEF (diesel exhaust fluid) over said set period of time; a difference between the maximum and minimum remaining service life of the fuel filter over said set period of time; maximum coolant temperature reported over said set period of time; maximum oil temperature reported over said set period of time; mean value of tire pressure over said set period of time; and/or maximum value of an odometer of the first vehicle over said set period of time.

The parameters concerning the weather and the environment may include a mean outside temperature recorded in the first vehicle.

In an exemplary embodiment, the analysis of the data received is performed by means of the implementation of a univariate anomaly detection algorithm that identifies fuel consumption above a certain threshold as anomalous average fuel consumption.

Also, a synthetic minority oversampling algorithm can be used on the data received.

In an exemplary embodiment, the explainable artificial intelligence algorithm further comprises quantifying the influence of each parameter by means of the application of weights to each of the parameters and the quantification of the parameters taking said applied weights into account. Furthermore, the parameters can be normalized and divided according to influence groups, wherein the influence groups include a low influence group, a medium influence group, and a high influence group.

In an exemplary embodiment, a total fuel consumption of the first vehicle over a certain period is also predicted by taking into account the parameters concerning driving behaviour that have a value equal to 0 and implementing a regression model based on an automatic learning algorithm.

In an exemplary embodiment, the data concerning the state and the operation are received in real time as they are acquired by sensors or tracking devices included in each of the vehicles.

Other embodiments of the invention which are disclosed herein also include computer programme products for performing the steps and operations of the method proposed in the first aspect of the invention. More particularly, a computer programme product is an embodiment which has a computer-readable medium including computer programme instructions coded therein which, when executed in at least one processor of a computer system, cause the processor to perform the operations indicated in the present document as embodiments of the invention.

Some of the advantages provided by the invention are:

- Greater driver and passenger/cargo safety, by knowing driving habits better and having better control of the maintenance of each vehicle.
- Improved productivity, by controlling usage times, by optimising route planning, by locating the position of the vehicles in real time, by controlling rest times and possible fatigue situations.
- Improved efficiency and cost reduction, by optimising routes, reducing customer delivery times, reducing gasoline consumption and reducing downtimes.

Brief description of the drawings

The foregoing and other features and advantages will be more fully understood from the following detailed description, by way of mere illustration and not limitation, of some exemplary embodiments with reference to the attached drawings, wherein:

Figure 1 shows the flowchart of the process carried out by the proposed method, according to an exemplary embodiment of the present invention.

Figure 2 illustrates the average fuel consumption of a vehicle with days of anomalous fuel consumption.

Figure 3 illustrates the parameters/variables influencing anomalous fuel consumption for a selected day, together with the parameters/variables which are influencing at the group level for that period.

Figure 4 illustrates the comparison of the value of a variable on that day against the mean for the vehicles in that group for the days that they have not had anomalous average fuel consumption.

Detailed description of the invention and exemplary embodiments

The present invention provides a method and computer programmes for the management of vehicle fleets. The invention detects anomalous average fuel consumption in a given vehicle throughout the day based on a set of input parameters concerning said vehicle that can affect average fuel consumption.

Input parameters can be classified into four categories:

- Parameters concerning the behaviour of the vehicle.
- Parameters concerning the state of the vehicle.
- Parameters concerning the weather and the environment of the vehicle.
- General parameters used to identify the records.

Some of the parameters that can be used and how to calculate them are indicated below. These parameters are indicative, and although they are common for the latest versions of many of the main tracking devices, they may not be available for certain devices or versions thereof. In the event that any of the parameters is missing, the proposed solution will be equally applicable, simply working with a smaller input data matrix with fewer variables.

*Table 1. Variables used to generate explanations.*

| Variable name | Units | Description | Type | Class |
|---|---|---|---|---|
| count_ harsh_ brakes | Events | Number of harsh braking operations of a vehicle in one day | + | Driving behaviour |
| count_ harsh_turns | Events | Number of harsh turns of a vehicle in one day | + | Driving behaviour |
| count_ jackrabbit | Events | Number of jackrabbit accelerations of a vehicle in one day | + | Driving behaviour |
| count_ neutral | Events | Number of events in neutral gear | + | Driving behaviour |
| count_ reverse | Events | Number of events in reverse gear | + | Driving behaviour |
| engine_oil_ variation | % | Source variable: Remaining service life of the engine oil (%). Variable used: Difference between the maximum and minimum remaining service life of the engine oil on that day and for that vehicle. | + | State of the vehicle |
| fuel_ exhaust_ fluid_ variation | % | Source variable: DEF (diesel exhaust fluid) level. Variable used: Difference between the maximum and minimum DEF on that day and for that vehicle. | + | State of the vehicle |
| fuel_filter_ life_variation | % | Source variable: Remaining service life of the fuel filter (%). Variable used: Difference between the maximum and minimum remaining service life of the fuel filter on that day and for that vehicle. | + | State of the vehicle |
| hours_ speed_ control | Hours | Time with speed_control=1 | + | Driving behaviour |
| idle_time | Hours | Total time in the day of an active vehicle with speed=0 | + | Driving behaviour |
| max_ engine_ cool_temp | °C | Max. coolant temperature reported on that day | + | State of the vehicle |
| max_ engine_oil_ temp | °C | Max. oil temperature reported on that day | + | State of the vehicle |
| mean_ braking_acc | m/s^2 | Mean value of braking acceleration (values <0) | + | Driving behaviour |
| mean_ exterior_ temp | % | Mean exterior temperature recorded for a vehicle-day. | - | Weather and environment |
| mean_ forward_acc | m/s^2 | Mean value of forward acceleration (values >0) | + | Driving behaviour |

(continued)

| Variable name | Units | Description | Type | Class |
|---|---|---|---|---|
| mean_ speed_city | m/s | Mean value of speeds in the city (speed events < 0) | + | Driving behaviour |
| mean_ speed_hwy | m/s | Mean value of speeds on the highway (speed events >0) | + | Driving behaviour |
| mean_tire_ pressure_fl | Pa | Source variable: Front-left tire pressure. Variable used: mean value of tire pressure for one vehicle-day | - | State of the vehicle |
| mean_tire_ pressure_fr | Pa | Source variable: Front-right tire pressure. Variable used: mean value of tire pressure for one vehicle-day | - | State of the vehicle |
| mean_tire_ pressure_rl | Pa | Source variable: Rear-left tire pressure. Variable used: mean value of tire pressure for one vehicle-day | - | State of the vehicle |
| mean_tire_ pressure_rr | Pa | Source variable: Rear-right tire pressure. Variable used: mean value of tire pressure for one vehicle-day | - | State of the vehicle |
| per_fuel_idle | % | Percentage of idling fuel consumption of a vehicle-day with respect to its total fuel consumption | + | Driving behaviour |
| per_time_ city | % | Percentage of time with city behaviour for a vehicle-day. This is used to get the time in the city and the time on the highway. | + | Driving behaviour |
| rpm_high | Events | Source variable: Engine speed (RPM). Variable used: Number of events with rpm >= 1900 | + | Driving behaviour |
| speed_over_ 120 | Hours | Time with speed > 120 km/h (Hours) | + | Driving behaviour |
| total_ odometer | km | Maximum value of the odometer in the day | + | State of the vehicle |
| trip_kms | km | Kilometers traveled. Difference between the maximum and minimum odometer value for each car on a specific day. | - | General |
| with_ passenger | boolean | 1 if there is (an) additional passenger(s), 0 if not. | + | Driving behaviour |
| rpm_red | Seconds | Time with RPM > 3500 and speed < 40 km/h | + | Driving behaviour |
| rpm_oranqe | Seconds | Time with RPM > 3500 and speed <= 80 km/h and >= 40 km/h | + | Driving behaviour |
| rpm_yellow | Seconds | Time with RPM > 3500 and speed > 80 km/h | + | Driving behaviour |
| vehicle_id | | Unique ID for each vehicle | | General |
| vehicle_ group | | Group to which the vehicle belongs. Each vehicle group is calculated based on the first 11 digits of the VIN. | | General |
| day | | Day for this record | | General |
| month | | Month for this record | | General |
| year | | Year for this record | | General |
| trip_fuel_ used | Liters | Fuel consumption made in the day. Sum (per day and vehicle) of this variable. | | General |

Table 1 includes the name of the parameter, the units in which it is measured, and how it is calculated (Description). It also includes whether the contribution of this parameter is positive (an increase in this variable could increase average fuel consumption) or negative (a reduction in the value of this variable could cause an increase in average fuel consumption). These are business heuristics that must be taken into account within the generation of explanations. The Class column indicates the group to which the parameters belong.

This input data set defines the X variables of the system (and will be referred to hereinafter as FAR: Fleet Analytic Record). These X variables include all the subgroups of parameters described above, except for the *General* parameters because they are parameters that are used to identify the records. Each row of this FAR will represent the daily aggregate of data for a vehicle on a particular day.

The Y variable will be the average fuel consumption of a vehicle throughout a day, calculated as:

$$avg\_fuel\_consumption = \frac{trip\_fuel\_used}{trip\_kms} \times 100$$

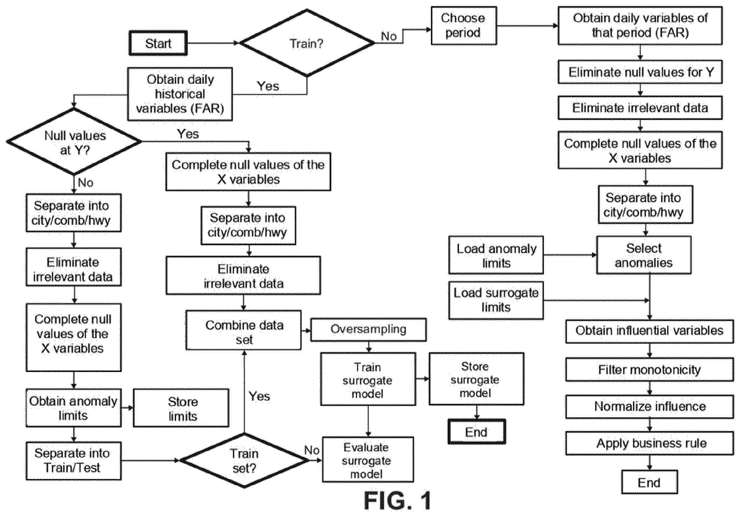

Figure 1 shows the flowchart of the process carried out by the algorithm to obtain explanations.

The process begins by differentiating two stages. The first stage consists of training the models both for the detection of anomalies and for the generation of explanations.

1. Training (Train):

At this stage, the first step is to obtain the historical FAR for the vehicles in the fleet. As mentioned above, FAR data is obtained after daily aggregations of the events sent by the vehicle's IoT sensors/devices. Under certain circumstances, some of the devices may not report fuel or distance traveled events for that day, so a vehicle-day combination may have no value for its Y variables. For this reason, the first point in the process is to distinguish which vehicles have data for the Y variable, and which do not.

Separate into city/comb/hwy:

First taking into account the vehicles with a value for the Y variable, the separation of trips is applied depending on whether the behaviour of the vehicle on that day has been more similar to highway, city or combined behaviour. To this end, the following rules are applied in order to classify if a specific day for a vehicle is "city", "comb" (combined) or "hwy" (highway).

*Is hwy IF per_time_city ≤ low_th_time AND trip_kms ≥ th_kms IS comb IF per_time_city > low_th_time AND per_time_city < high_th_time AND trip_kms ≥ th_kms*

For any other combination, it will be considered that the behaviour of the trip is city behaviour. *low_th_time* and *high_th_time* define the percentage of time in city thresholds that are considered for each of those classes. *th_kms* establishes the minimum distance traveled threshold considered. These thresholds can be defined in a flexible manner according to the business specifications, but they must be previously specified at this point in the process, and from then on they are already set for the rest of the application. As a guide, and depending on the criterion, *low_th_time=0.2, high_th_time=0.8* and *th_kms=25* can be considered.

Elimination of irrelevant data:

Within the initial processing of the data, in some exemplary embodiments, unrepresentative vehicle-day data, in which the distance traveled is too low to be significant, is also eliminated. To that end, a minimum threshold is defined that eliminates all vehicles that have a distance traveled less than that threshold.

In addition, since the event reports from IoT devices sometimes include some erroneous data, in order to avoid including noise in the system, vehicles with an average fuel consumption that is excessively high or low are eliminated within this step, taking business values as a reference.

Complete null values of the X variables:

In addition to sometimes not having the data concerning the Y variable, sometimes the IoT devices do not send information about any of the X variables of the FAR either. In order not to lose excessive vehicle records and to maintain a statistically significant data set, these values are imputed with values inferred from the rest of the fleet.

By separating the data set according to its *vehicle_group,* each variable without a value is assigned the mean value of the value of said variable for the group, in order to be able to maintain the record but that the value of this variable for that vehicle-day is not significant for the model. Other methods for imputing null values can be used at this point.

Obtain anomaly limits:

After having prepared the FAR with the previous steps, an unsupervised method for the detection of anomalies is applied (since there is no information available a *priori* about which vehicles have anomalous average fuel consumption). The foregoing will be applied to each vehicle group separately (according to their *vehicle_group)* and differentiating by type of trip (city/comb/hwy).

In this section, different methods can be applied, such as Isolation Forests [1], Local Outlier Factors [2], or One-Class SVM [3].

In an exemplary embodiment, a univariate anomaly detection based only on the average fuel consumption is applied by applying a box plot so that those outside the following limits are identified as anomalous average fuel consumption:

$$\text{lim\_up} = Q3 + 1.5IQR$$

$$\text{lim\_low} = Q1 - 1.5IQR$$

However, only those that are above the upper limit will be considered anomalous data, and vehicles with low fuel consumption compared to the rest of the fleet group for that type of trip will not be detected as anomalies.

Obtaining limits that define from what value of a certain continuous variable can be considered an anomaly is not something specific to box plots. There are other proposals for the extraction of limits on unsupervised models, as is the case of [4], where the extraction of limits is proposed after detecting anomalies using One-Class SVM based on the information of the decision boundary.

Store limits:

Once the limits that define when a vehicle in a certain group has anomalous fuel consumption have been inferred, they are stored for later use.

Separate into Train/Test:

At this point, a supervised data set is already available, where the new Y variable is a binary variable that determines whether or not a vehicle has had anomalous average fuel consumption. This will be the data passed to the surrogate model to obtain the explanations based on the patterns that are extracted by relating the binary data of being anomalous or not with respect to the input data X. An independent surrogate model is obtained for each *vehicle_group.*

At this point, the data is separated into a training subset (train) and a test subset (test). The surrogate model is thereby trained in this training subset, and the test subset is used to quantify said model's ability to find relationships between the input variables and whether or not a vehicle has anomalies in fuel consumption.

Null values for the Y variable (average fuel consumption):

Part of the historical vehicle-day data may contain relevant information that is being discarded simply because its total fuel consumption or distance traveled has not been reported in a day. For these vehicles, in an exemplary embodiment, the value of their average fuel consumption is imputed using the K-Nearest Neighbours technique [5], as proposed in [6]. The idea is to find *neighbouring* points similar to those in which the Y variable is missing (similar in terms of the values of X for that vehicle-day, considering each *vehicle_group* separately), and give those vehicles as the Y value the average Y of the neighbours that do have a value in it. This increases the number of records available to the model.

It should be noted that these inferred records will not be used for either anomaly detection or subsequent predictions. They will only be used to increase the ability to infer relationships in the model, but will be transparent to the end user of the application.

This data subset will follow a processing similar to that applied in the previous points to the other subset.

Combine data sets:

Data from the two processing operations are combined for model training.

Oversampling:

Since there can be a large imbalance in the Y labels (with the value of whether or not the data is anomalous), since there are many fewer anomalies than non-anomalous points, synthetic minority oversampling techniques, for example, using the SMOTE algorithm, can be used to increase the general nature of the model [7]. With SMOTE, fictitious points of the minority class similar to the existing ones are generated in order to have a balance in the records of both labels.

Train surrogate model:

At this point, a model that allows relationships to be inferred between the X variables and whether or not a point is anomalous is trained. There are two restrictions here that need to be taken into account.

- Restriction 1 (R1): The model has to be able to find relationships between the X input variables and the Y binary variable with a good success rate.
- Restriction 2 (R2): The model must be able to explain which variables have influenced a point being anomalous, and how much they have influenced it.

R1 limits the set of algorithms that can be used. If it weren't for R1, a simple logistic regression would serve to find relationships between the input and the output. However, White-box models of this type are linear models which limit the complexity of the extracted patterns.

R2 also limits the set of algorithms that can be used. If not for R2, any complex Black-box algorithm such as those belonging to Deep Learning could be used. However, these algorithms do not directly explain the relationship between the input variables and their predictions.

For this reason, to jointly satisfy R1 and R2, the proposed method uses the Explainable Boosting Machine (EBM) algorithm [8]. EBM is a Gradient Boosting algorithm which trains models in parallel for the different variables independently and then combines the contributions of all of them. This makes it possible to infer weights for each of the input variables in order to quantify which ones have been more influential in relation to the others. This allows R2 to be satisfied. EBM also allows complex non-linear relationships between the input and output data to be extracted, thus allowing very high success rates to be achieved, and thereby satisfying R1. A surrogate model is trained for a separate FAR data subset based on its *vehicle_group.*

Evaluate model:

Each model is evaluated on the corresponding test data subset, and each model is labeled with its success rate (using F1 as a metric) based on whether it is >0.75 (high), <=0.75 and >=0.50 (medium), or <0.5 (low).

Store surrogate model:

The models trained on historical data are stored for later use in the phase of generating explanations. The processing and preparation of the data is similar to that of the previous point, except that the temporary data window will be the one specified by the user, and not the entire history. Once this window is defined, the corresponding historical data is loaded, and the records that have not been reported are eliminated.

2. Generation of Explanations:

In the phase of generating explanations, the user can define an arbitrary time period to view the anomalous data of that period, and receive explanations about it, based on the input data X.

In this case, particularly only input data with average fuel consumption data is considered. Based on this data, the X values of the variables that have null values are completed with the mean value of the group, in order to be able to use these records in the models. Once again, non-significant records are eliminated for having excessively high or low average fuel consumption, or for having traveled very little distance during the day.

This initial preparation process continues with the separation of the data set selected by the user into city/comb/hwy, and, after loading the average fuel consumption limits per group for each type of trip, the points of said period that are anomalous are identified. This allows being able to work with data on which the model has not been trained. For all subsequent steps, only the subset of anomalous vehicles-days is selected, since these are the only points that are of interest to explain.

After these steps, the models for each vehicle group are loaded.

Obtain influencing variables:

At this point, the local explanation of each of the anomalous vehicles-days of each of the groups is obtained for the period in question. These explanations will contain the weight of influence of each of the X variables in which the classification of that vehicle-day has been in the anomalous category.

Together with the vehicle-day explanations, the general explanation of which group of variables they are influencing in general for there to be anomalous fuel consumption in said group is provided. Although EBM provides the option of obtaining global explanations of the model, these would be based on all the historical information on which it has been trained. However, what matters is centering the influence for the period defined by the user. To that end, the explanations for each vehicle-day of that group are obtained, and the weights of each of the variables are averaged, in order to have an overview of the contributions of said variables for that group in that period.

Monotonicity filter:

In an exemplary embodiment, within the set of influential variables, only the positive ones are selected. When the Type + variables in Table 1 increase, they can contribute to increasing the average fuel consumption. The Type - variables, to maintain monotonicity and for their relevant coefficients were positive, have been input in the model with negative values.

At this point, variables with a negative influence or influence close to 0 are thus eliminated.

Normalize influence:

The weights reported by the EBM algorithm do not have a predefined range. For this reason, in order to compare the relative influence of the different variables, all the coefficients are normalized within the same scale (0.1).

Apply rules:

The last step consists of applying the final rules. This consists of obtaining the mean values of the X variables for the non-anomalous vehicles-days of each group, and comparing those of the anomalous vehicles-days. Apart from the fact that they could be influential variables, this step of the process exclusively selects the variables for a vehicle-day when their value is higher than the group average for non-anomalous vehicles-days. The same is done for the explanations of the group in that period.

Finally, a number of reference values are defined to give a qualitative vision of the weight of the variables and to report to the user not so much the value of the weight itself, but rather whether the influence of that variable has been "little", "medium" or "a lot".

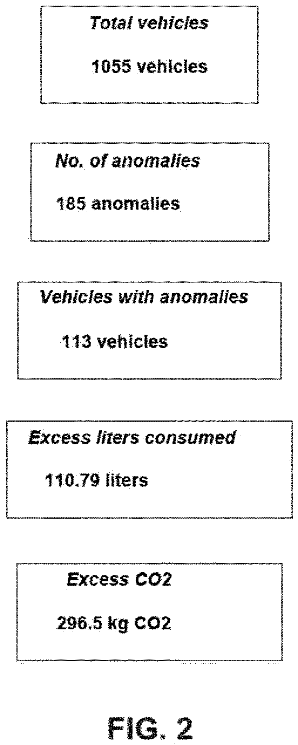

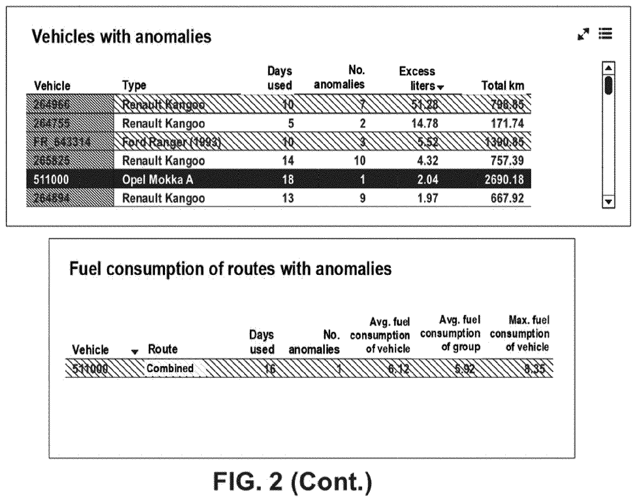

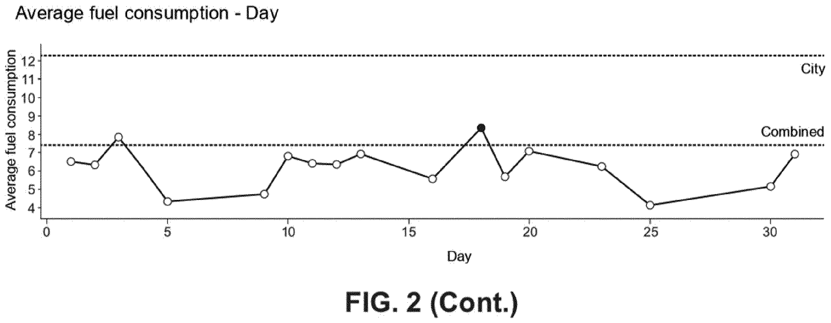

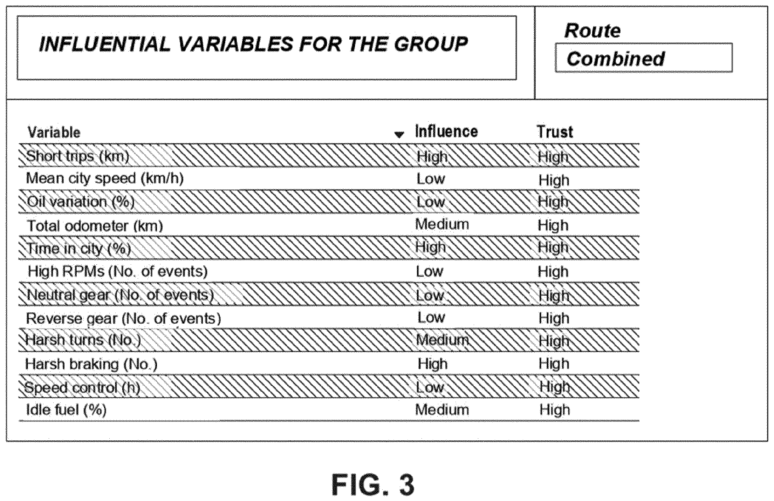

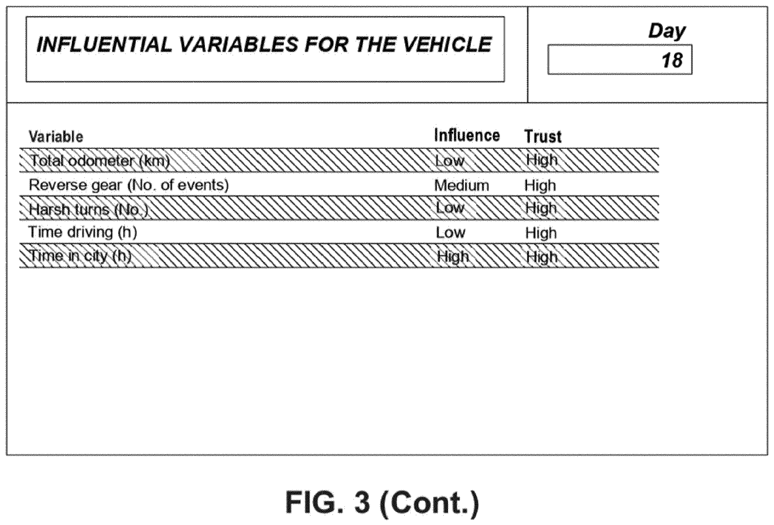

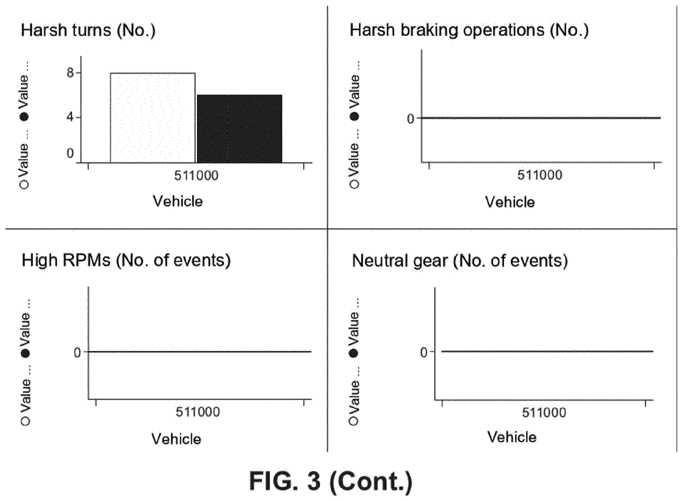

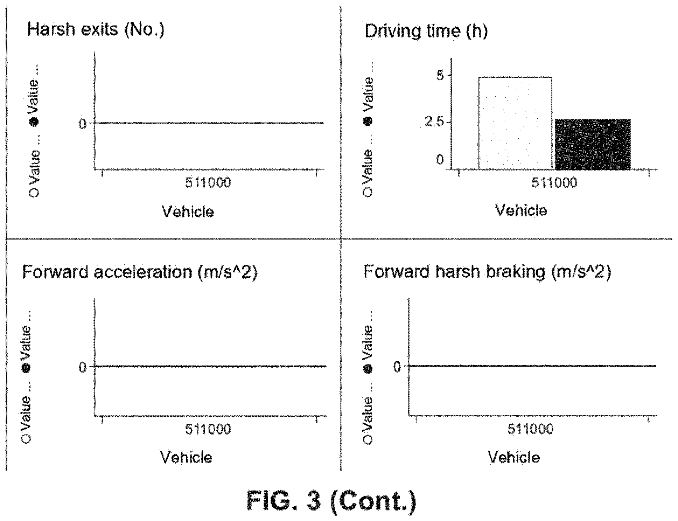

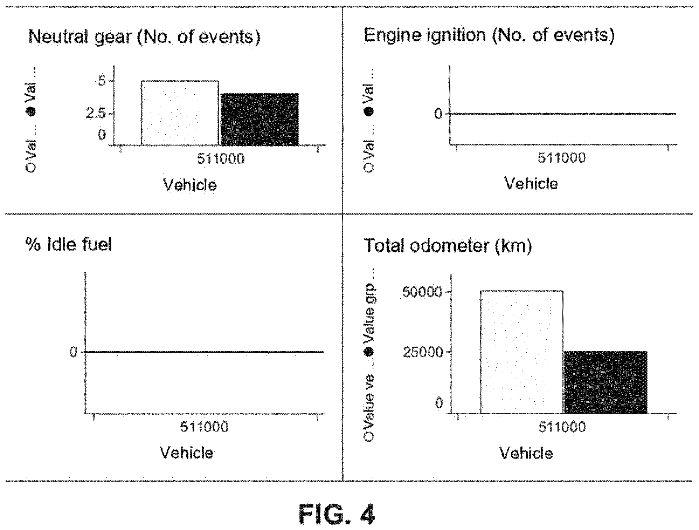

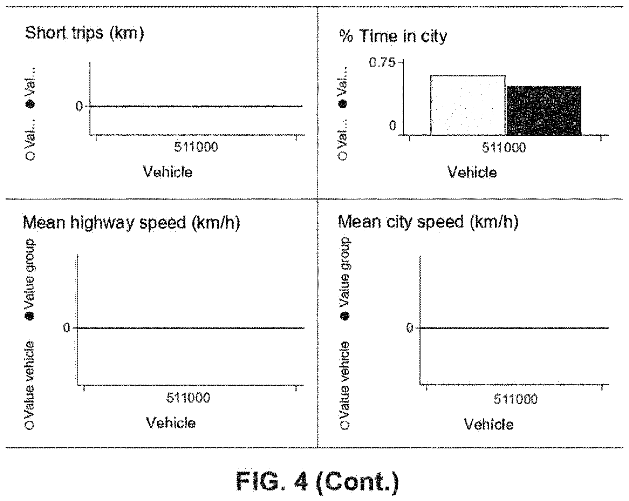

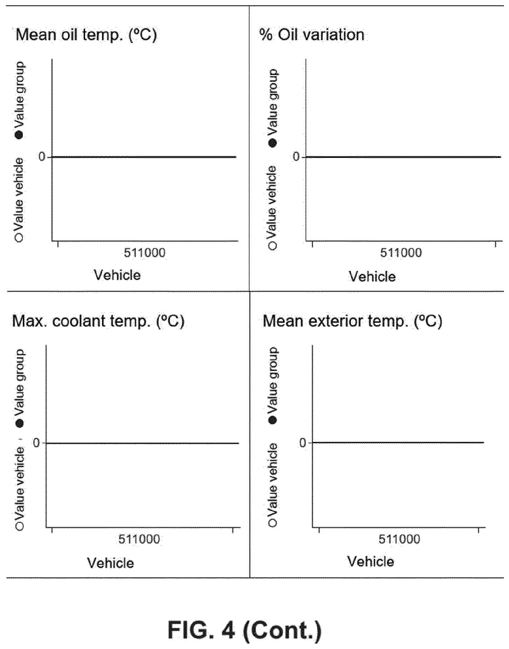

Figures 2, 3 and 4 show a display of the control panel, where the user, after selecting a period, can see the evolution of average fuel consumption for vehicles-days depending on whether the trips have been highway, city or combined trips, together with the days that there have been anomalies and the threshold from which the average fuel consumption is considered anomalous. By selecting an anomalous vehicle-day, it is possible to see the variables that have been influential for that vehicle to have anomalous average fuel consumption that day, together with the variables that have generally influenced the group to have anomalous average fuel consumption.

It also shows the comparison of how much these influential variables have been worth in that vehicle-day and how much they have been worth at the level of mean vehicles-days of that group and in that type of trip, considering the cases in which there have been no average fuel consumption anomalies.

In some exemplary embodiments, the analysis can be complemented with the training of other EBM models on the same set of X input variables, but using the total fuel consumption of the vehicle on that day as the Y value, thus having, in this case, a regression model. This seeks to predict the total fuel consumption per vehicle in that period of time selected by the user for the case in which each of the variables labeled as "driving behaviour" would have been worth 0. Thus, the fuel savings that would have been achieved are quantified, for example, in the case in which no car in the fleet had made "harsh turns". Simply, fuel consumption for that period is predicted with that variable being worth 0 for the entire fleet, and the prediction is compared with the actual fuel consumption that has occurred in that period, indicating how much of a decrease it would have entailed. Alternatively, other supervised algorithms can be used to obtain non-linear relationships, since explanations are not being extracted directly from those models trained on total fuel consumption.

As possible alternatives to using EBM as a method for generating explanations, other surrogate methods can be used. Thus, a complex model (black-box) can be trained on the X data and the Y variable of whether or not it is anomalous, in an overfitting manner, and use this model as an oracle to extract explanations of specific vehicles with techniques such as LIME [ 9], whereby the influence of the X variables would also be quantified for a particular point.

In addition to generating explanations with the weight and influence of the input variables for the output prediction, explanations of another type can be generated, such as by means of rules or by using prototypes. Generating explanations by means of rules could be done following the steps in the previous example with LIME but using Anchors [10] instead of LIME. The explanation by means of prototypes consists of explaining specific classifications based on other similar data from the historical set. Thus, the explanation of why a vehicle is anomalous on one day would be done by showing other similar vehicles that have also been anomalous. The steps described with the use of LIME would be followed but instead of LIME, an algorithm such as Protodash [11] would be used.

The present invention:

- Automatically detects average fuel consumption anomalies, including explanations about the variables that have contributed to the average fuel consumption being anomalous with respect to the rest of the vehicles in the group.
- Automatically incorporates rules into the process for generating explanations to ensure consistency between model output and domain knowledge.
- Quantifies the fuel consumption saved in different simulation scenarios in which certain actionable variables are reduced.
- Uses state-of-the-art algorithms in the field of XAI that allow jointly infer relationship patterns between input variables and an average fuel consumption to be anomalous or not, while being able to explain why. The complexity and execution time are thereby reduced by not having to separate the training using a complex model, and the generation of explanations using a different algorithm.
- Generates explanations not only for private vehicles in one day, but also for the rest of vehicles in that category for a specific period of time, by means of the proposal to generate pseudo-global explanations that add the contributions of individual vehicles in that period and give the general value for all of them.
- Uses State-of-the-Art techniques to improve the statistical quality of the data available with the IoT sensors for model training, thanks to data balancing with the SMOTE technique and the imputation of null values with the application of the KNN imputation technique.
- Detects anomalies in which a generation of limits is included to define, in a univariate case, when this variable is considered to have an anomalous value, so that this information can be incorporated visually.
- Defines an input data set agnostic to the IoT device connected to the vehicle that specifies the influential variables to consider in an analysis of average fuel consumption anomalies. Along with this, a proposal for automatic rules to identify the type of trip made by a vehicle (highway, city or combined) so that different models can be trained depending on the type of trip taken.

The proposed invention can be implemented in hardware, software, firmware or any combination thereof. If it is implemented in software, the functions can be stored in or coded as one or more instructions or code in a computer-readable medium.

Although exemplary embodiments of the present invention have been described in the present document with reference to various specific embodiments, it will be obvious to the person skilled in the art to carry out the invention with modifications. All of these modifications are considered to be within the spirit and scope of the claims. Likewise, the claims are intended to cover all generic and specific features of the described exemplary embodiments and all statements of the scope of protection which, as a matter of language, could be said to lie therebetween.

The scope of the present invention is defined in the attached claims.

**References:**

[1] Fei Tony Liu, Kai Ming Ting, and Zhi-Hua Zhou. "Isolation forest". In: 2008 Eighth IEEE International Conference on Data Mining. IEEE. 2008, pp. 413-422

[2] Markus M Breunig et al. "LOF: identifying density-based local outliers". In: ACM sigmod record. Vol. 29.2. ACM. 2000, pp. 93-104

[3] Bernhard Schölkopf et al. "Support vector method for novelty detection". In: Advances in neural information processing systems. 2000, pp. 582-588

[4] Barbado González, Alberto et al. Method for detecting anomalies in data communications. 300328143. 2019

[5] Fukunaga, K., & Narendra, P. M. (1975). A branch and bound algorithm for computing k-nearest neighbors. IEEE transactions on computers, 100(7), 750-753.

[6] Olga Troyanskaya, Michael Cantor, Gavin Sherlock, Pat Brown, Trevor Hastie, Robert Tibshirani, David Botstein and Russ B. Altman, Missing value estimation methods for DNA microarrays, BIOINFORMATICS Vol. 17 no. 6, 2001 Pages 520-525.

[7] N. V. Chawla, K. W. Bowyer, L. O. Hall, W. P. Kegelmeyer, "SMOTE: synthetic minority over-sampling technique," Journal of artificial intelligence research, 321-357, 2002.

[8] Nori, H., Jenkins, S., Koch, P., & Caruana, R. (2019). InterpretML: A Unified Framework for Machine Learning Interpretability. arXiv preprint arXiv: 1909.09223.

[9] Ribeiro, M. T., Singh, S., & Guestrin, C. (2016, August)." Why should I trust you?" Explaining the predictions of any classifier. In Proceedings of the 22nd ACM SIGKDD international conference on knowledge discovery and data mining (pp. 1135-1144).

[10] Ribeiro, M. T., Singh, S., & Guestrin, C. (2018, April). Anchors: High-precision model-agnostic explanations. In Thirty-Second AAAI Conference on Artificial intelligence.

[11] Gurumoorthy, K. S., Dhurandhar, A., & Cecchi, G. (2017). Protodash: Fast interpretable prototype selection. arXiv preprint arXiv: 1707.01212.

**Claims**

1.  A method for the management of vehicle fleets, which comprises:

    the obtaining, by a processor, of data concerning the state and the operation of each of a plurality of vehicles of a particular type in a vehicle fleet; and
    detecting, by the processor, an anomalous average fuel consumption over a certain period in at least one first vehicle of said vehicle fleet on the basis of analysis of the data received,
    the method being **characterised in that** it further comprises:

    determining and accounting for, by the processor, the cause of said anomalous average fuel consumption detected by means of the implementation of an explainable artificial intelligence algorithm that takes into account different parameters of the first vehicle,
    including parameters concerning: the driving behaviour of the first vehicle over a set period of time, the state of the first vehicle, and a number of meteorological and environmental elements.

2.  The method according to claim 1, wherein the data concerning the state and the operation of the vehicle fleet are separated based on a trip taken by each vehicle, wherein said trip comprises driving the vehicle in the city, on the highway, or combined city/highway driving.

3.  The method according to claim 2, wherein the parameters concerning the driving behaviour of the first vehicle comprise one or more of: number of harsh braking operations of the first vehicle over said set period of time; number of harsh turns of the first vehicle over said set period of time; number of jackrabbit accelerations of the first vehicle over said set period of time; number of events in neutral gear; number of events in reverse gear; time with speed control active; total time over said set period of time with speed equal to 0; mean value of braking acceleration; mean value of forward acceleration; mean value of speeds in the city and/or on the highway; percentage of idling fuel consumption of the first vehicle with respect to its total fuel consumption; percentage of time with city behaviour; number of events with RPM above a threshold; time with a speed greater than 120 km/h; time with RPM > 3500 and speed < 40 km/h; time with RPM > 3500 and speed <= 80 km/h and >= 40 km/h; and/or time with RPM > 3500 and speed > 80 km/h.

4.  The method according to claim 2 or 3, wherein the parameters concerning the state of the first vehicle comprises one or more of: a difference between the maximum and minimum remaining service life of the engine oil over said set period of time; a difference between the maximum and minimum DEF over said set period of time; a difference between the maximum and minimum remaining service life of the fuel filter over said set period of time; maximum coolant temperature reported over said set period of time; maximum oil temperature reported over said set period of time; mean value of tire pressure over said set period of time; and/or maximum value of an odometer of the first vehicle over said set period of time.

5. The method according to claim 2, 3 or 4, wherein the parameters concerning the weather and the environment comprise the mean outside temperature recorded in the first vehicle.

6. The method according to any one of the preceding claims, wherein the analysis of the data received is performed by means of the implementation of a univariate anomaly detection algorithm that identifies fuel consumption above a certain threshold as anomalous average fuel consumption.

7. The method according to any one of the preceding claims, wherein said explainable artificial intelligence algorithm further comprises quantifying the influence of each parameter by means of the application of weights to each of the parameters and the quantification of the parameters taking said applied weights into account.

8. The method according to claim 7, which further comprises normalizing the parameters and dividing them according to groups of influence, wherein the groups of influence include a group of low influence, a group of medium influence and a group of high influence.

9. The method according to the preceding claims, which further comprises predicting a total fuel consumption of the first vehicle over a certain period taking into account the parameters concerning driving behaviour that have a value equal to 0 and implementing a regression model based on a machine learning algorithm.

10. The method according to claim 6, which further comprises using a synthetic minority oversampling algorithm on the data received.

11. The method according to claim 1, wherein the data concerning the state and the operation are received in real time as they are acquired by sensors or tracking devices included in each of the vehicles.

12. A computer programme product including code instructions which, when executed in a processor of a computing device, implement a method according to claims 1 to 11.

Start → Obtain daily historical variables (FAR) → Null values at Y?

Null values at Y? — Yes → Complete null values of the X variables → Separate into city/comb/hwy → Eliminate irrelevant data → Combine data set

Null values at Y? — No → Separate into city/comb/hwy → Eliminate irrelevant data → Complete null values of the X variables → Obtain anomaly limits → Store limits → Separate into Train/Test

Separate into Train/Test → Train set?

Train set? — Yes → Combine data set → Oversampling → Train surrogate model → Store surrogate model → End

Train set? — No → Evaluate surrogate model

Train? — No → Choose period → Obtain daily variables of that period (FAR) → Eliminate null values for Y → Eliminate irrelevant data → Complete null values of the X variables → Separate into city/comb/hwy → Select anomalies → Obtain influential variables → Filter monotonicity → Normalize influence → Apply business rule → End

Load anomaly limits → Select anomalies

Load surrogate limits → Select anomalies

Train? — Yes → Obtain daily historical variables (FAR)

FIG. 1

Total vehicles

1055 vehicles

No. of anomalies

185 anomalies

Vehicles with anomalies

113 vehicles

Excess liters consumed

110.79 liters

Excess CO2

296.5 kg CO2

# FIG. 2

## Vehicles with anomalies

| Vehicle | Type | Days used | No. anomalies | Excess liters ▼ | Total km |
|---|---|---|---|---|---|
| 264966 | Renault Kangoo | 10 | 7 | 51.28 | 798.85 |
| 264755 | Renault Kangoo | 5 | 2 | 14.78 | 171.74 |
| FR 643314 | Ford Ranger (1993) | 10 | 3 | 5.52 | 1390.85 |
| 265675 | Renault Kangoo | 14 | 10 | 4.32 | 757.39 |
| 511000 | Opel Mokka A | 18 | 1 | 2.04 | 2690.18 |
| 264694 | Renault Kangoo | 13 | 9 | 1.97 | 667.92 |

## Fuel consumption of routes with anomalies

| Vehicle ▼ | Route | Days used | No. anomalies | Avg. fuel consumption of vehicle | Avg. fuel consumption of group | Max. fuel consumption of vehicle |
|---|---|---|---|---|---|---|
| 511000 | Combined | 16 | 1 | 6.12 | 5.92 | 8.35 |

**FIG. 2 (Cont.)**

EP 4 152 240 A1

Average fuel consumption - Day

**FIG. 2 (Cont.)**

| INFLUENTIAL VARIABLES FOR THE GROUP | | Route |
| --- | --- | --- |
| | | Combined |

| Variable | Influence | Trust |
| --- | --- | --- |
| Short trips (km) | High | High |
| Mean city speed (km/h) | Low | High |
| Oil variation (%) | Low | High |
| Total odometer (km) | Medium | High |
| Time in city (%) | High | High |
| High RPMs (No. of events) | Low | High |
| Neutral gear (No. of events) | Low | High |
| Reverse gear (No. of events) | Low | High |
| Harsh turns (No.) | Medium | High |
| Harsh braking (No.) | High | High |
| Speed control (h) | Low | High |
| Idle fuel (%) | Medium | High |

**FIG. 3**

EP 4 152 240 A1

| INFLUENTIAL VARIABLES FOR THE VEHICLE | Day |
|---|---|
| | 18 |

| Variable | Influence | Trust |
|---|---|---|
| Total odometer (km) | Low | High |
| Reverse gear (No. of events) | Medium | High |
| Harsh turns (No.) | Low | High |
| Time driving (h) | Low | High |
| Time in city (h) | High | High |

**FIG. 3 (Cont.)**

FIG. 3 (Cont.)

Harsh exits (No.)

Driving time (h)

Forward acceleration (m/s^2)

Forward harsh braking (m/s^2)

FIG. 3 (Cont.)

FIG. 4

FIG. 4 (Cont.)

EP 4 152 240 A1

FIG. 4 (Cont.)

## INTERNATIONAL SEARCH REPORT

| | |
|---|---|
| International application No. | |
| PCT/ES2020/070405 | |

**A. CLASSIFICATION OF SUBJECT MATTER**

*G06Q50/00* (2012.01)

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

EPODOC,INVENES,WPI,Inspec

**C. DOCUMENTS CONSIDERED TO BE RELEVANT**

| Category* | Citation of document, with indication, where appropriate, of the relevant passages | Relevant to claim No. |
|---|---|---|
| X | FERREIRA JOAO C et al.. The Impact of Driving Styles on Fuel Consumption: A Data-Warehouse-and-Data-Mining-Based Discovery Process. Ieee Transactions On Intelligent Transportation Systems, 20151001 Ieee, Piscataway, Nj, Usa., 01/10/2015, Vol. 16, N° 5, pages 2653 - 2662, ISSN 1524-9050, <DOI: 10.1109/TITS.2015.2414663> the whole document. | 1-11 |

☐ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |
| Date of the actual completion of the international search | Date of mailing of the international search report |
| 19/01/2021 | **(02/02/2021)** |
| Name and mailing address of the ISA/ | Authorized officer |
| | M. Alvarez Moreno |
| OFICINA ESPAÑOLA DE PATENTES Y MARCAS | |
| Paseo de la Castellana, 75 - 28071 Madrid (España) | |
| Facsimile No.: 91 349 53 04 | Telephone No. 91 3495495 |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Isolation forest. **FEI TONY LIU ; KAI MING TING ; ZHI-HUA ZHOU.** 2008 Eighth IEEE International Conference on Data Mining. IEEE, 2008, 413-422
- LOF: identifying density-based local outliers. **MARKUS M BREUNIG et al.** ACM sigmod record. ACM, 2000, vol. 29, 93-104
- **BERNHARD SCHÖLKOPF et al.** Support vector method for novelty detection. *Advances in neural information processing systems,* 2000, 582-588
- **BARBADO GONZÁLEZ, ALBERTO et al.** *Method for detecting anomalies in data communications,* 2019
- **FUKUNAGA, K. ; NARENDRA, P. M.** A branch and bound algorithm for computing k-nearest neighbors. *IEEE transactions on computers,* 1975, vol. 100 (7), 750-753
- **OLGA TROYANSKAYA ; MICHAEL CANTOR ; GAVIN SHERLOCK ; PAT BROWN ; TREVOR HASTIE ; ROBERT TIBSHIRANI ; DAVID BOTSTEIN ; RUSS B. ALTMAN.** Missing value estimation methods for DNA microarrays. *BIOINFORMATICS,* 2001, vol. 17 (6), 520-525
- **N. V. CHAWLA ; K. W. BOWYER ; L. O. HALL ; W. P. KEGELMEYER.** SMOTE: synthetic minority over-sampling technique. *Journal of artificial intelligence research,* 321-357
- **NORI, H. ; JENKINS, S. ; KOCH, P. ; CARUANA, R.** InterpretML: A Unified Framework for Machine Learning Interpretability. *arXiv: 1909.09223,* 2019
- **RIBEIRO, M. T. ; SINGH, S. ; GUESTRIN, C.** Why should I trust you?'' Explaining the predictions of any classifier. *Proceedings of the 22nd ACM SIGKDD international conference on knowledge discovery and data mining,* August 2016, 1135-1144
- **RIBEIRO, M. T. ; SINGH, S. ; GUESTRIN, C.** Anchors: High-precision model-agnostic explanations. *Thirty-Second AAAI Conference on Artificial intelligence,* April 2018
- **GURUMOORTHY, K. S. ; DHURANDHAR, A. ; CECCHI, G.** Protodash: Fast interpretable prototype selection. *arXiv: 1707.01212,* 2017